# EUROPÄISCHE PATENTSCHRIFT

(11) **EP 3 568 692 B1**
(45) Veröffentlichungstag und Bekanntmachung des Hinweises auf die Patenterteilung: **29.01.2025**
(21) Anmeldenummer: 17825407.4
(22) Anmeldetag: 08.12.2017
(51) Int. Cl.: G01N 27/36, G01N 27/333, G01N 27/30, G01N 27/414, G01N 27/416

(54) **ELEKTROCHEMISCHER SENSOR UND VERFAHREN ZUR HERSTELLUNG DAVON**
ELECTROCHEMICAL SENSOR AND METHOD FOR FABRICATION THEREOF
CAPTEUR ÉLECTROCHIMIQUE ET SON PROCÉDÉ DE FABRICATION

(30) Priorität: 09.12.2016 EP 16203103
(43) Veröffentlichungstag der Anmeldung: 20.11.2019
(73) Patentinhaber: Mettler-Toledo GmbH, 8606 Greifensee (CH)
(72) Erfinder: LIMON PETERSEN, Juan, 8906 Bonstetten (CH); RUTZ, Andreas, 8052 Zürich (CH)
(74) Vertreter: Mettler-Toledo
(86) Internationale Anmeldenummer: PCT/EP2017/081993
(87) Internationale Veröffentlichungsnummer: WO 2018/104510

(56) Entgegenhaltungen:
- EP-A1- 1 396 718
- EP-A1- 1 729 121
- WO-A1-2015/158533
- DE-A1- 102009 001 632
- DE-A1- 102012 111 811
- DE-A1- 102013 013 601
- US-A- 4 376 681
- US-B1- 6 464 940

## Beschreibung

Die Erfindung betrifft einen elektrochemischen Sensor sowie ein Verfahren zu dessen Herstellung. Insbesondere betrifft die Erfindung den Aufbau eines Sensors in jenem Bereich, der im Falle des Gebrauchs des elektrochemischen Sensors mit dem Messmedium in Kontakt steht.

Konventionelle elektrochemische oder auch potentiometrische Sensoren, insbesondere solche zum Vermessen des pH-Werts eines Messmediums sind als sogenannte Glaselektroden ausgebildet. Sie weisen üblicherweise einen Glasschaft auf, an dessen im Gebrauch dem Messmedium zugewandten bzw. in das Messmedium eingetauchtem Ende als Messelement eine etwa kugel- oder halbkugelförmige Glasmembran aus elektrochemisch aktivem pH-Glas fest mit dem Glasschaft verbunden ist, d.h. verschmolzen. Der auf diese Weise gebildete Messstab ist mit einer Pufferlösung gefüllt. Abhängig vom pH-Wert des Messmediums bildet sich über der Glasmembran eine Potentialdifferenz aus, welche mittels einer in die Pufferlösung eingetauchten Metallelektrode als Ableitelement gegenüber dem Gleichgewichtspotential einer Referenzelektrode als Bezugspunkt gemessen wird.

Ferner sind sogenannte Ionensensitive-Feldeffekt-Transistor-Sensoren (ISFET) bekannt, bei welchen der pH-Wert eines Messmediums oder die Konzentration eines bestimmten Ions, für welches der Sensor eine sensitive Schicht aufweist, durch eine Änderung des Source-Drain-Stromes des Transistors gemessen wird.

Im Gegensatz zu konventionellen potentiometrischen Sensoren weist der ISFET-Sensor als sensitiven Bereich ein im Gebrauch dem Messmedium zugewandtes, weitestgehend ebenes oder planes Messelement auf.

In der US 6,464,940 B1 wird der Aufbau, die Herstellung und das Messprinzip einer pH-Messzelle beschrieben, welche für die Bestimmung kleinster Volumina an Messmedium, d.h. in der Grösse eines Tropfens, ausgeformt ist. Als Reservoir für das Messmedium wird eine ringförmige Wand aus Pyrexglas auf einer auf ein Halbleitersubstrat aufgebrachten Isolatorschicht angeordnet und mit einer Metallelektrode beschichtet, so dass letztere mit dem Messmedium in Kontakt gelangen kann. Die dem Reservoir gegenüberliegende Seite des Substrats wird ebenfalls mit einer Metallelektrode beschichtet. Somit kann bei einer Frequenz um 1 MHz zwischen der sich im Gebrauchsfall mit dem Messmedium in Kontakt befindenden Elektrode und einer auf der Rückseite des Halbleitersubstrats angebrachten Elektrode eine Kapazitäts-Spannungscharakteristik gemessen werden, welche abhängig vom pH-Wert des Messmediums variiert.

Während einerseits die Herstellung von konventionellen elektrochemischen Glassensoren aufwändig ist und die Glasmesszellen einzeln produziert werden müssen, weisen diese andererseits eine hohe Sensitivität und Langzeitstabilität auf, wohingegen die Produktion von ISFET-Sensoren oder jene mit einem ebenen oder planen Messelement, wie beispielsweise in US 6,464,940 B1 offenbart, grosstechnisch in Wafertechnologie hergestellt werden können. Betreffend ihrer Stabilität und Widerstandsfähigkeit gegenüber aggressiven Medien erreichen die ISFET-Sensoren jedoch nicht jene Werte, die elektrochemischen Glassensoren zu eigen sind. ISFET-Sensoren weisen im Vergleich zu elektrochemischen Glassensoren eine ungünstigere Driftstabilität auf und sind weniger gut für die Prozessmesstechnik geeignet.

Wünschbar sind daher elektrochemische Sensoren, deren Messelement, beispielsweise die pH-sensitive Glasmembran bei elektrochemischen Glassensoren, als planes Messelement ausgebildet ist; da die ein solches Messelement aufweisenden Sensorelemente grosstechnisch in Wafertechnologie produzierbar sind.

Es hat sich gezeigt, dass bei einem elektrochemischen Sensor mit einem planen Messelement, welches in Verbindung mit einem Sensorelement in einen Sensorschaft eingebaut ist, Messfehler auftreten können, wenn ein im Gebrauch das Eindringen von Medium - in der Regel ein Messmedium oder ein Reinigungsmedium - vermeidendes Dichtungselement direkt auf der Messfläche des Messelements aufliegt. Derartige Messfehler können in Form einer verminderten Steilheit beziehungsweise einer langen Ansprechzeit auftreten, d.h. die Stabilität und die Reproduzierbarkeit des elektrochemischen Sensors könnten leiden.

Aufgabe der Erfindung ist es einen elektrochemischen Sensor vorzuschlagen, der eine in ihrer Grösse bzw. flächigen Ausdehnung abgegrenzte, also eine genau definierte Messfläche aufweist. Dies bedeutet, dass wenn der Sensor im Gebrauch in ein Messmedium oder Reinigungsmedium eingetaucht ist, das Messelement des Sensors eine genau definierte mediumsberührte Fläche aufweist, bei gleichzeitig guter Abdichtung des Sensors gegenüber dem Mess- oder Reinigungsmedium.

Diese Aufgabe wird gelöst durch einen elektrochemischen Sensor gemäss Anspruch 1 und ein Herstellverfahren des elektrochemischen Sensors gemäss Anspruch 11, einschliesslich des Einbaus eines Sensorelements in einen Sensorschaft. Vorteilhafte Ausgestaltungen sind in den abhängigen Ansprüchen ausgeführt.

Ein elektrochemischer Sensor weist ein Sensorelement mit einer im Gebrauch einem Messmedium zugewandten Messfläche auf, welches Sensorelement ein planes Messelement umfasst. Ferner ist der elektrochemische Sensor mit einem Sensorschaft versehen, welcher an seinem im Gebrauch dem Messmedium zugewandten Ende ein Fenster mit einer Einfassung aufweist, und in welchen Sensorschaft das Sensorelement im Bereich des Fensters eingebaut ist. Der elektrochemische Sensor besitzt ein ringförmiges Dichtungselement, welches zwischen dem Sensorelement und der Einfassung angeordnet ist. Ein Isolatorelement ist fest und untrennbar mit dem Messelement des Sensorelements unter Freistellung oder Aussparung der Messfläche verbunden. Dabei ist das Dichtungselement, welches den Sensor gegen das Eindringen von Messmedium schützt, zwischen dem Isolatorelement und der Einfassung dichtend angeordnet.

Unter einem planen Messelement soll im vorliegenden Zusammenhang ein mit einem einseitig eine Messfläche bildenden ebenen sensitiven Bereich - beispielsweise in Form einer sensitiven Schicht als sensitives Material - versehenes Substrat oder ein scheibenförmiges beidseitig weitgehend ebenes Messelement aus sensitivem Material verstanden werden.

Ein Isolatorelement bestehend aus isolierendem Material bildet beim erfindungsgemässen elektrochemischen Sensor mit dem Messelement eine gemeinsame Struktur, d.h. ist mit diesem untrennbar verbunden.

Das Messelement sowie das Isolatorelement sind in sich nicht zwingend homogen. Sie können auch mehrlagig aufgebaut sein; beispielsweise kann das Messelement eine oder mehrere sensitive Schichten umfassen.

Messelement und Isolatorelement formen, gegebenenfalls unter Einbeziehung weiterer für die Funktion eines elektrochemischen Sensors notwendiger Elemente - die jedoch nicht Gegenstand der Erfindung sind - das Sensorelement.

Ein Dichtungselement dient der Abdichtung des Sensorschaft-Inneren des elektrochemischen Sensors gegenüber einem Mess- oder auch Reinigungsmedium, in welches der Sensor im Falle seines Gebrauchs an einem Ende eingetaucht wird. Das Dichtungselement weist ein chemisch und thermisch beständiges Polymer- oder Elastomermaterial auf.

Mit Freistellung oder Aussparung einer Messfläche des Messelements, ist der Bereich zu verstehen, der der Messumgebung des Sensors zugewandt ist und im Gebrauch mit dem Messmedium in Kontakt steht.

Der Aufbau eines erfindungsgemässen elektrochemischen Sensors ermöglicht eine grosstechnische Herstellung des Sensorelements sowie den Aufbau einer für den Einbau in einen Sensorschaft geeigneten Form in Wafertechnologie. Insbesondere gewährleistet das im Bereich seines Kontakts mit dem Messmedium untrennbar mit dem Messelement verbundene Isolatorelement eine in ihrer Ausdehnung genau definierte im Gebrauch mit dem Messmedium in Kontakt stehende Messfläche, d.h. mediumsberührte Fläche. Ferner bewirkt das Isolatorelement zusammen mit dem ringförmigen Dichtungselement eine gute Abdichtung, indem verhindert wird, dass Messmedium zwischen Dichtungselement und Messfläche eindringen könnte. Dies macht sich letztendlich in einer verbesserten Sensorsteilheit und erhöhten Langzeitstabilität bemerkbar.

Das Sensorelement des erfindungsgemässen elektrochemischen Sensors weist eine flache, ebene Scheibe aus elektrochemisch aktivem pH-Glas als Messelement auf. Das Messelement kann jedoch auch als eine ebene elektrochemisch aktives pH-Glas umfassende Schicht oder Schichtstruktur ausgestaltet sein.

In einer vorteilhaften Weiterbildung des elektrochemischen Sensors weist das Isolatorelement ein thermisch und chemisch beständiges Isolatorglas auf, dessen thermischer Ausdehnungskoeffizient jenem des Messelements angepasst ist, insbesondere identisch mit dem thermischen Ausdehnungskoeffizienten des Messelements ist. Unter einem identischen Ausdehnungskoeffizienten soll hier ein solcher verstanden werden, welcher eine Abweichung zwischen Isolatorglas und pH-Glas von weniger als 5e⁻⁷ /K aufweist.

Alternativ kann das Isolatorelement eine mittels physikalischer oder chemischer Abscheideverfahren aufgebrachte Isolatorschicht, insbesondere aus Siliziumnitrid aufweisen. In diesem Falle muss auf Grund der geringen Schichtdicke einer solchen Isolatorschicht, der thermische Ausdehnungskoeffizient des Isolatorelements nicht dem des Messelements entsprechen.

In einer weiteren Ausführungsform ist der Sensorschaft zylindrisch und das Fenster und damit die Freistellung bzw. die Aussparung an der Stirnfläche des Sensorschafts angeordnet. Dadurch wird ein einfach handhabbarer elektrochemischer Sensor gebildet.

In einer weiteren Ausführungsform ist der Sensorschaft zylindrisch und das Fenster in einem abgeflachten Bereich des Zylindermantels des Sensorschafts angeordnet.

Je nach Anordnung des Fensters und damit der Freistellung bzw. Aussparung an der Stirnfläche oder in einem abgeflachten Bereich des Zylindermantels des Sensorschafts kann die Messfläche des Messelements verschiedene Formen annehmen. Sie kann kreisförmig, ellipsenförmig oder rechteckig ausgeformt sein. Das Erfordernis einer gegenüber einer kreisförmigen Messfläche, wie sie in der Regel im Falle eines in die Stirnfläche des Sensorschafts eingebauten Sensorelements vorhanden ist, vergrösserten Messfläche kann die ellipsenförmige oder rechteckige Form der Messfläche begünstigen. Es ist jedoch immer erforderlich, dass die freigestellte Fläche etwas kleiner ist als die Dichtfläche, um einen direkten Kontakt der Dichtung mit der aktiven Messfläche zu verhindern.

Aufgrund der Ausführungsform eines erfindungsgemässen elektrochemischen Sensors, bei welcher der Sensorschaft aus thermisch und chemisch resistentem metallischen Material oder Kunststoff gefertigt ist, wird ein robuster, weitgehend unzerbrechlicher elektrochemischer Sensor ermöglicht, welcher auch in rauer chemischer Umgebung eingesetzt werden kann und autoklavierbar ist.

Das Verfahren zur Herstellung eines erfindungsgemässen elektrochemischen Sensors mit einer im Gebrauch einem Messmedium zugewandten ebenen sensitiven Messfläche weist die folgenden Schritte auf:
- Herstellen einer untrennbaren Verbindung eines Wafers, der ein sensitives Material umfasst, mit einem Isolatormaterial zu einem mindestens zweilagigen Wafer;
- Erzeugen einer vordefinierten Dicke durch Bearbeiten des sensitiven Materials und gegebenenfalls des damit verbundenen Isolatormaterials;
- Strukturieren des Isolatormaterials unter Freistellung einer Messfläche im sensitiven Material zur Bildung eines oder mehrerer Messelemente, wobei das Messelement eine flache, ebene Scheibe aus elektrochemisch aktivem pH-Glas aufweist oder eine flache, ebene Schicht oder Schichtstruktur aufweist, welche elektrochemisch aktives pH-Glas umfasst;
- Schneiden des mindestens zweilagigen Wafers aus verbundenem sensitivem Material und strukturiertem Isolatormaterial in den Bereichen vorhandenen Isolatormaterials zu mit Isolatorelementen versehenen Sensorelementen;
- Einbau eines derart erzeugten Sensorelements in einen Schaft, wobei ein Dichtungselement zwischen dem Isolatorelement und einer Einfassung am im Gebrauch dem Messmedium zugewandten Ende des Sensorschafts dichtend eingebracht wird.

Dieses Verfahren erlaubt die grosstechnische Herstellung der Sensorelemente und liefert einen kostengünstigen elektrochemischen Sensor.

In einer vorteilhaften Ausführung des Verfahrens weist das sensitive Material ein elektrochemisch aktives pH-Glas und das Isolatormaterial ein thermisch und chemisch beständiges Isolatorglas mit einem zum sensitiven Material angepassten, insbesondere identischen, thermischen Ausdehnungskoeffizienten auf, wobei das Isolatormaterial vermittels "Direct Bonding" oder "Fusion Bonding" mit dem sensitiven Material untrennbar zu einem mindestens zweilagigen Wafer verbunden wird.

In einer alternativen Ausführung des Verfahrens umfasst das Isolatormaterial eine Isolatorschicht, insbesondere aus Siliziumnitrid, welche mittels einem physikalischen oder chemischen Abscheideverfahren auf das sensitive Material aufgebracht, mit diesem zu einem mindestens zweilagigen Wafer verbunden und anschliessend strukturiert wird. In einer weiteren Alternative kann die mittels eines physikalischen oder chemischen Abscheideverfahrens aufgebrachte Isolatorschicht vermittels einer Maske direkt während des Abscheidens in Form von Isolatorelementen strukturiert erzeugt werden.

Die Strukturierung des Isolatormaterials auf dem sensitiven Material kann mit Vorteil vermittels Ätztechnik, insbesondere nasschemisch mit Flusssäure oder vermittels Plasmaätzen erfolgen.

Die Erfindung wird im Folgenden anhand der stark schematisierten Zeichnungen erläutert. Dabei zeigen:
- Fig. 1: einen elektrochemischen Sensor in Form eines pH-Messstabs mit einer Referenzelektrode in seiner Gesamtansicht;
- Fig. 2: eine Teilansicht eines elektrochemischen Sensors in Form eines pH-Messstabs, mit einem in den Sensorschaft eingebauten Sensorelement in einer ersten Ausführungsform;
- Fig. 3A: eine Teilansicht einer weiteren Ausführungsform eines elektrochemischen Sensors in Form eines pH-Messstabs, mit einem in den Sensorschaft eingebauten Sensorelement; und
- Fig. 3B: ein mit einem Isolatorelement verbundenes Messelement eines Sensorelements gemäss Fig. 3A;
- Fig. 4: die Schritte zur Herstellung und zum Einbau eines Sensorelements in einen Sensorschaft.

Im Folgenden soll die Erfindung beispielhaft anhand eines pH-Sensors mit einem eine plane Messfläche aufweisenden Sensorelement, beispielsweise aus elektrochemisch aktivem pH-Glas, beschrieben werden.

Es sei an dieser Stelle darauf hingewiesen, dass die einzelnen Bauelemente der verschiedenen Ausführungsformen elektrochemischer Sensoren in den folgenden Figuren nicht massstabsgetreu gezeichnet sind.

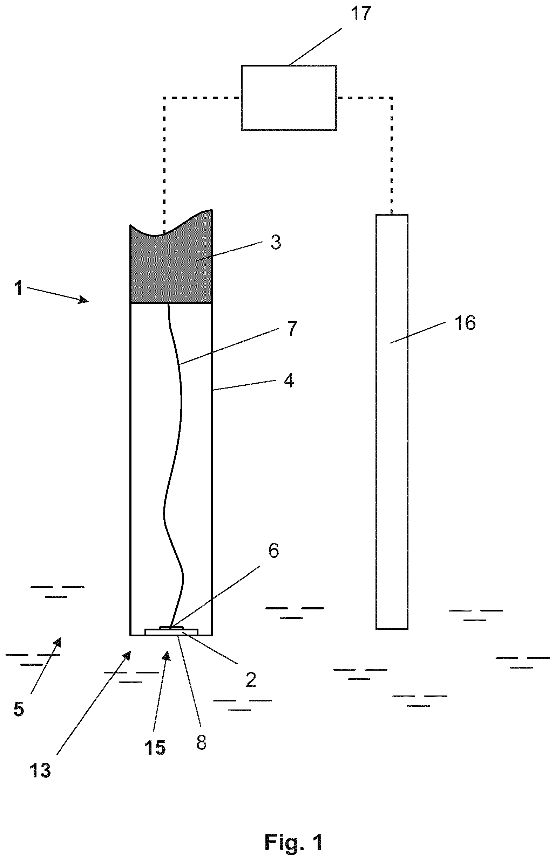

Figur 1 zeigt einen elektrochemischen Sensor 1 in einer stark schematisierten Darstellung. Der gezeigte elektrochemische Sensor 1 bildet einen Messstab, welcher in Verbindung mit einer Referenzelektrode 16 zur Bestimmung des pH-Wertes eines Messmediums verwendet wird. Über eine Leitung (in der Figur gestrichelt gezeichnet) sind der Sensor 1 und die Referenzelektrode 16 an einen Transmitter 17 angeschlossen.

Der elektrochemische Sensor 1 weist an seinem in der Figur nach unten weisenden Ende ein Fenster 13 auf, in welchem ein Sensorelement 15 angeordnet ist. Das Sensorelement 15 umfasst ein Messelement 2 und weist unter anderem eine plane Schicht, das heisst eine ebene Fläche oder Membran aus elektrochemisch aktivem pH-Glas auf. Alternativ kann das Messelement 2 auch eine beidseitig plane Scheibe aus pH-Glas umfassen. Das Sensorelement 15 ist in einen Sensorschaft 4 eingebaut. Im Gebrauch des elektrochemischen Sensors 1 ist dieser teilweise, d.h. mindestens in dem das Fenster 13 mit dem Sensorelement 15 umfassenden Bereich, in ein Messmedium 5 eingetaucht, wobei eine Messfläche 8 des Messelements 2, eine mediumsberührte Fläche bildend, dem Messmedium 5 zugewandt ist. Der elektrochemische Sensor 1 weist an seinem dem Sensorelement 16 entgegen gesetzten Ende einen Sensorkopf 3 auf, welcher einen Teil der Sensorelektronik enthält. Letztere ist zur Übertragung eines Messsignals mit einem Kontakt 6 über eine Leitung 7 verbunden. Im Inneren des Sensorschafts 4 können am Sensorelement 15 weitere Baugruppen angeordnet sein, die der Erfassung des Messsignals dienen. Diese sind jedoch nicht Gegenstand der vorliegenden Erfindung und werden daher im Folgenden nicht weiter betrachtet.

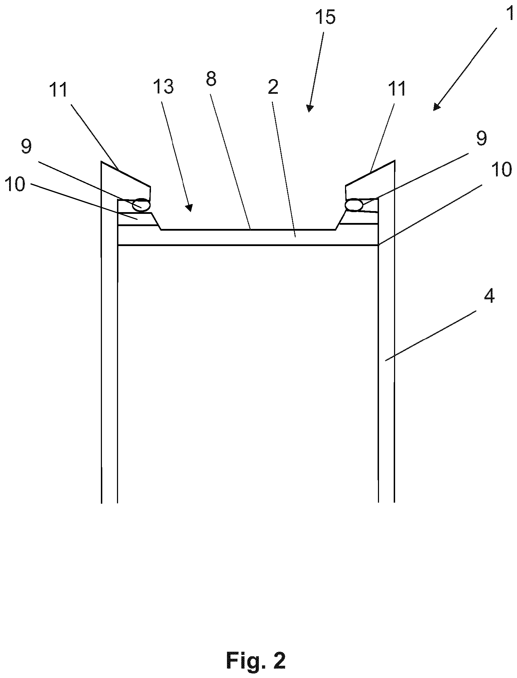

In Figur 2 ist in einer Schnittdarstellung eine Teilansicht des im Gebrauch dem Messmedium 5 (s. Fig. 1) zugewandten Ende des elektrochemischen Sensors 1 gezeigt. Das in den Sensorschaft 4 eingebaute Sensorelement 15 kann ein Messelement 2 aus elektrochemisch aktivem pH-Glas aufweisen. Entscheidend ist, dass die mediumsberührende Oberfläche des Messelements 2 plan ist. Vorteilhafterweise ist das Messelement 2 als flache Scheibe ausgebildet. Gegenüber dem Messmedium 5 ist der elektrochemische Sensor 1 vermittels eines elastischen Dichtungselements 9 abgedichtet. Das Dichtungselement 9 kann bevorzugt als Dichtungsring mit rundem oder flachem Profil aus einem chemisch und thermisch beständigen Polymer, wie PTFE (Polytetrafluorethylen), oder einem Elastomer, insbesondere einem Perfluoroelastomer (FFKM), gebildet sein. Abweichend von einer Kreisform kann ein solcher Dichtungsring auch weitere Formen annehmen, beispielsweise elliptisch oder rechteckig sein.

Zwischen dem Dichtungselement 9 und der im Gebrauch mit dem Messmedium 5 in Kontakt stehenden Messfläche 8 des elektrochemischen Sensors 1 ist ein mit dem Messelement 2 untrennbar verbundenes Isolatorelement 10 angeordnet. Dieses Isolatorelement 10 besitzt eine Struktur mit einer in ihrer geometrischen Ausdehnung genau definierten, im Gebrauch mediumsberührte Freistellung der Messfläche 8 des Messelements 2. In der in Figur 2 gezeigten Anordnung ist das Isolatorelement 10 bevorzugt ringförmig ausgebildet, und bildet somit eine kreisförmige Freistellung der Messfläche 8 des Messelements 2. Das Isolatorelement 10 ist durch das sogenannte Waferbonding-Verfahren, auch Direct Bonding oder Fusion Bonding genannt untrennbar mit dem Messelement 2 verbunden. Dieses Bondingverfahren ist aus dem MEMS-Packaging bzw Mikrofluidikbereich hinreichend bekannt und wird hier nicht weiter ausgeführt.

Das Isolatorelement 10 ist im Falle eines pH-Sensors mit einem planen Messelement 2 aus elektrochemisch aktivem pH-Glas aus einem artgleichen Material, namentlich aus einem isolierenden Glas, mit an den thermischen Ausdehnungskoeffizienten des pH-Glases angepasstem, insbesondere im Wesentlichen gleichem, thermoelektrischen Ausdehnungskoeffizienten. Durch die untrennbare Verbindung zwischen dem Material des Messelements, also dem sensitiven Material, und dem Material des Isolatorelements, also Isolatormaterial, ist der Sensor aus mindestens 2-lagigem Wafermaterial gefertigt.

Der Sensorschaft 4 ist bevorzugt aus Metall, beispielsweise Edelstahl, Titan, oder aus einem chemisch und thermisch beständigen harten Polymermaterial, zum Beispiel PEEK, PVDF oder PFA (Perfluoroalkoxy) oder einem vergleichbaren Fluorpolymeren, oder auch aus einem Verbundmaterial gefertigt. Er weist an seinem im Gebrauch in das Messmedium eingetauchten Ende eine sich in Richtung zum Schaftinneren erstreckende Einfassung 11 auf. Die Abmessungen des Sensorschafts 4 können beispielsweise 12 mm für den Durchmesser, 1 mm für die Wandstärke betragen und die Einfassung 11 kann sich über circa 1 mm zum Schaftinneren erstrecken. Selbstredend sind auch elektrochemische Sensoren mit davon abweichenden Abmessungen herstellbar.

Das Dichtungselement 9 ist zwischen der Einfassung 11 und dem Isolatorelement 10 dichtend angeordnet, das heisst der Polymer- oder Elastomerring ist durch Druck zwischen der Einfassung 11 und dem Isolatorelement 10 leicht verformt, um so die Dichtheit der elektrochemischen Messsonde 1 an ihrem im Gebrauch in das Messmedium oder Reinigungsmedium eingetauchten Ende zu gewährleisten.

Durch die vollständige Auflage des Dichtungselements 9 auf dem Isolatorelement 10 anstatt einer direkten Auflage auf dem Messelement 2, wird verhindert, dass auch bei vollständiger Dichtungswirkung, Messmedium zwischen der Messfläche 8 und dem elastischen Dichtungselement 9 vorhanden sein könnte, was zu einer undefinierten Messfläche 8 führen würde. Die erfindungsgemässe Lösung liefert also eine in ihrer Ausdehnung genau definierte Messfläche 8, welche nicht durch Randeffekte und/oder Austauscheffekte im Dichtungsbereich gestört wird.

Alternativ zu einem Isolatorelement 10, welches aus einem **isolierenden, nicht sensitiven Glas mit einem an das Messelement 2 aus** elektrochemisch aktivem pH-Glas angepassten thermischen Ausdehnungskoeffizienten gefertigt ist, kann auch eine mittels physikalischer oder chemischer Abscheideverfahren erzeugte Schicht, beispielsweise aus Siliziumnitrid, das Isolatorelement 10 bilden. Aufgrund der üblichen Siliziumnitrid-Schichtdicken von etwa 0,1 bis 0,5 Mikrometern, ist hier keine Anpassung der thermischen Ausdehnungskoeffizienten von elektrochemisch aktivem pH-Glas des Messelements 2 und Isolatorelement 10 notwendig. Als weitere Materialien für solcherart aufgebrachte Isolatorelemente 10 kommen auch andere Isolatormaterialien, wie Siliziumoxid, Aluminiumoxid und der gleichen mehr in Frage. Denkbar sind auch Beschichtungen mit chemisch und thermisch beständigen Polymermaterialien.

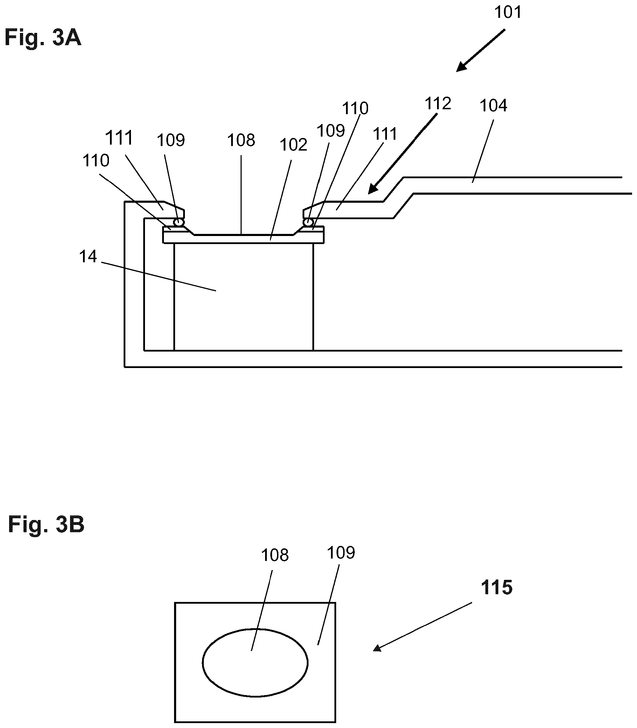

Die Figuren 3A und 3B zeigen Teilansichten einer weiteren Ausführungsform eines elektrochemischen Sensors 101, mit einem in den Sensorschaft 104 eingebauten Sensorelement 115: Figur 3A in einer Schnittzeichnung längs des Sensorschafts 104 und Figur 3B das mit dem Isolatorelement 110 verbundene Messelement 102 in der Aufsicht.

In dieser Ausführungsform weist der Sensorschaft 104 an seinem im Gebrauch dem Messmedium 5 zugewandten Ende einseitig einen abgeflachten Bereich 112 mit einem Fenster 113 auf, in welchem das Sensorelement 115 angeordnet ist. Dieses vermittels einer Haltevorrichtung 14 in die Seitenwand des Sensorschafts 104 eingebaute Sensorelement 115 kann ein Messelement 102 mit einer von einer kreisförmigen Form abweichenden Form haben, beispielsweise oval oder rechteckig mit abgerundeten Ecken oder dergleichen mehr. Diese Ausführungsform ermöglicht das Vorhandensein einer grösseren Messfläche 108 gegenüber der Konstruktion gemäss Figur 2, bei der das Sensorelement 2 quer zur Zylinderachse der Sensorschafts 4 eingebaut ist.

Auch in der in den Figuren 3A und 3B gezeigten Ausführungsform ist zwischen dem Dichtungselement 109 und der mit dem Messmedium 5 in Kontakt stehenden Messfläche 108 ein mit dem Messelement 102 untrennbar verbundenes Isolatorelement 110 angeordnet. Das entsprechende Isolatorelement 110 kann in dieser Ausführungsform als ovaler Ring ausgebildet sein oder aber auch, wie in Figur 3B gezeigt sich, abgesehen von der hier ovalförmigen Freistellung der Messfläche 108, den gesamten Randbereich des Messelements 102 bedecken. Wichtig ist, dass das Dichtungselement 109 vollständig auf dem Isolatorelement 110 aufliegt, und dass sich die durch die Freistellung ergebende Messfläche 108 in ihrer Grösse bzw. Ausdehnung genau definiert ist.

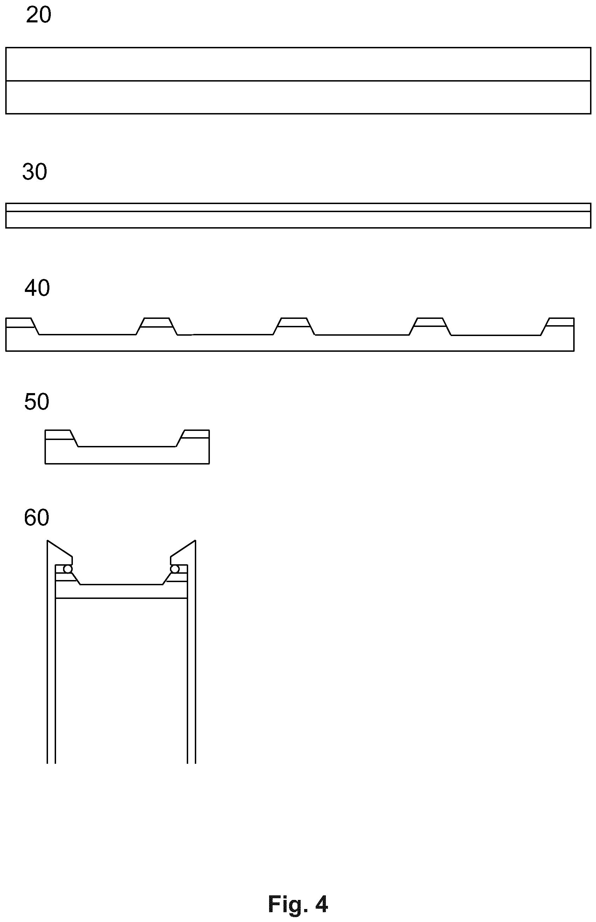

Die Figur 4 veranschaulicht beispielhaft die Schritte zur Herstellung und zum Einbau des Sensorelements 15 in den Sensorschaft 4 in der Ausführungsform eines elektrochemischen Sensors gemäss Figur 2 und für ein mittels Wafertechnologie mit dem Messelement 2 verbundenes Isolatorelement 10 aus chemisch und thermisch beständigem **Isolatorg**las. In Schritt 20 wird ein Wafer von circa 50 bis 100 mm Durchmesser aus elektrochemisch aktivem pH-Glas mit einer Dicke von 0,3 mm bis 1,2 mm, bevorzugt 0,6 mm mittels Direct Bonding oder Fusion Bonding mit einem gleich grossen Wafer aus chemisch und thermisch beständigem Isolatorglas mit angepasstem, insbesondere identischem, thermischen Ausdehnungskoeffizienten verbunden. Die genannten Methoden des sogenannten Waferbonding sind bekannt und werden daher nicht näher beschrieben.

Nach der Bildung eines derart untrennbar verbundenen mindestens zweilagigen Wafers aus dem Messelement 2 und dem Isolatorelement 10 wird in Schritt 30 mittels Schleifen und anschliessendem Polieren die Dicke beider Lagen des Wafers reduziert: auf etwa 0,1 mm für das Isolatorglas und etwa 0,1 bis 0,2 mm für das pH-Glas.

Anschliessend wird im Schritt 40 mittels nasschemischen Ätzens, eines Trockenätzprozesses oder mechanischen Prozesses wie powder plasting oder fluid jet polishing und unter Verwendung von Masken das Isolatorglas strukturiert, wobei eine Freistellung des pH-Glases in definierten Bereichen erzeugt wird, so dass genau definierte Messflächen 8 für die jeweiligen Messelemente 2 auf dem mindestens zweilagigen Wafer entstehen. Gleichzeitig bleibt in den Randbereichen das Isolatorglas stehen, um nach der Vereinzelung der Sensorelemente 15 die Isolatorelemente 10 als deren Bestandteil zu bilden

In Schritt 50 erfolgt die Vereinzelung zu Sensorelementen 15 mit den zugehörigen Isolatorelementen. Sie werden bevorzugt geschnitten, zum Beispiel mittels Laser- oder Diamantschneidens, und gegebenenfalls in eine geeignete Form geschliffen. Das Schneiden erfolgt in den Bereichen vorhandenen Isolatormaterials und in eine für den Einbau in einen Sensorschaft 4 geeignete Form, z.B. kreisförmig für einen Sensor gemäss Figur 2 oder rechteckig für einen Sensor gemäss Figur 3B.

Ein Sensorelement 15 wird in Schritt 60, gegebenenfalls nach weiterem Bearbeiten beziehungsweise dem Hinzufügen weiterer Baugruppen, die zur Herstellung der Funktionsfähigkeit eines Sensors 1 notwendig sind, in einen Sensorschaft 4 eingebaut, so dass das Isolatorelement 10 mit dem im Falle des Gebrauchs in ein Messmedium 5 eingetauchten Sensor 1 dem Messmedium 5 zugewandt ist. Dabei wird ein Dichtungselement 9 zwischen einer Einfassung 11 und dem Isolatorelement 10 dichtend angeordnet, das heisst das Sensorelement 15 mit dem Messelement 2 und dem Isolatorelement 10 wird durch kontrolliertes Einpressen einer Haltevorrichtung 14 im Inneren (siehe Figur 3A) des Sensorschafts 4 fixiert.

Die Herstellung eines Sensors, welcher eine mittels physikalischer oder chemischer Abscheideverfahren erzeugte Schicht als Isolatorelement, beispielsweise eine Siliziumnitridschicht, aufweist, erfolgt in analoger Weise. Das Beschichtungsverfahren ist bevorzugt PECVD (plasma enhanced chemical vapor deposition). Der Ätzprozess zur Herstellung der Freistellung erfolgt durch Plasmaätzen.

Alternativ könnten die Bereiche der Freistellung auch bereits mittels Masken auf dem Wafer aus sensitivem Material abgedeckt werden und das Isolatormaterial - hier Siliziumnitrid - bereits beim Aufbringen, z.B. mittels PVD (physical vapor deposition), gleich strukturiert aufgedampft bzw. abgeschieden werden.

Die Erfindung wurde anhand von bevorzugten Ausführungsformen gezeigt und beschrieben. Es sollen jedoch auch andere, hier nicht ausführlich genannte Ausführungen und Weiterbildungen der Erfindung vom Schutzumfang umfasst sein. Beispielsweise ist es denkbar beim Strukturieren des Isolatormaterials des Wafers verschiedene Muster in der Freistellung, beispielsweise Inseln und dergleichen mehr zu erzeugen.

### Liste der Bezugszeichen

- 1, 101: Elektrochemischer Sensor
- 2, 102: Messelement
- 3: Sensorkopf
- 4, 104: Sensorschaft
- 5: Messmedium
- 6: Kontakt
- 7: Leitung
- 8, 108: Messfläche
- 9, 109: Dichtungselement
- 10, 110: Isolatorelement
- 11, 111: Einfassung
- 112: Abgeflachter Bereich des Sensorschafts 104
- 13, 113: Fenster
- 14: Haltevorrichtung
- 15, 115: Sensorelement
- 16: Referenzelektrode
- 17: Transmitter
- 20: Waferbonding
- 30: Anpassung der Waferdicke
- 40: Strukturierung
- 50: Vereinzelung
- 60: Einbau

## Patentansprüche

1. Elektrochemischer Sensor (1, 101) aufweisend
ein Sensorelement (15, 115) mit einer im Gebrauch einem Messmedium (5) zugewandten Messfläche (8, 108), welches Sensorelement (15, 115) ein planes Messelement (2, 102) umfasst;
einen Sensorschaft (4, 104), welcher an seinem im Gebrauch dem Messmedium (5) zugewandten Ende ein Fenster (13, 113) mit einer Einfassung (11, 111) aufweist und in welchen Sensorschaft (4, 104) das Sensorelement (15, 115) im Bereich des Fensters (13, 113) eingebaut ist;
ein ringförmiges Dichtungselement (9, 109), welches zwischen dem Sensorelement (15, 115) und der Einfassung (11, 111) angeordnet ist;
wobei das Messelement (2, 102) eine flache, ebene Scheibe aus elektrochemisch aktivem pH-Glas aufweist oder eine flache, ebene Schicht oder Schichtstruktur aufweist, welche elektrochemisch aktives pH-Glas umfasst;
wobei das Sensorelement (15, 115) ein Isolatorelement (10, 110) aufweist, welches fest und untrennbar mit dem Messelement (2, 102) unter Freistellung der Messfläche (8, 108) verbunden ist; und
wobei das Dichtungselement (9, 109), den elektrochemischen Sensor gegen das Eindringen von Messmedium (5) schützend, zwischen dem Isolatorelement (10, 110) und der Einfassung (11, 111) dichtend angeordnet ist.

2. Elektrochemischer Sensor (1, 101) nach Anspruch 1, **dadurch gekennzeichnet, dass** das Isolatorelement (10, 110) ein thermisch und chemisch beständiges Isolatorglas aufweist, dessen thermischer Ausdehnungskoeffizient weitgehend identisch mit dem thermischen Ausdehnungskoeffizienten des Messelements (2, 102) ist.

3. Elektrochemischer Sensor (1, 101) nach Anspruch 1, **dadurch gekennzeichnet, dass** das Isolatorelement (10, 110) eine mittels physikalischer oder chemischer Abscheideverfahren aufgebrachte Isolatorschicht, insbesondere aus Siliziumnitrid aufweist.

4. Elektrochemischer Sensor (1, 101) nach einem der Ansprüche 1 bis 3, **dadurch gekennzeichnet, dass** der Sensorschaft (4, 104) zylindrisch ist und dass das Fenster (13, 113) an der Stirnfläche des Sensorschafts (4, 104) angeordnet ist.

5. Elektrochemischer Sensor (1, 101) nach einem der Ansprüche 1 bis 4, **dadurch gekennzeichnet, dass** der Sensorschaft (4, 104) zylindrisch ist und dass das Fenster (13, 113) in einem abgeflachten Bereich (112) des Zylindermantels des Sensorschafts (4, 104) angeordnet ist.

6. Elektrochemischer Sensor (1, 101) nach Anspruch 5, **dadurch gekennzeichnet, dass** die Messfläche (8, 108) des Messelements (2, 102) kreisförmig oder ellipsenförmig oder rechteckig ausgeformt ist.

7. Elektrochemischer Sensor (1, 101) nach einem der Ansprüche 1 bis 6, **dadurch gekennzeichnet, dass** der Sensorschaft (4, 104) aus thermisch und chemisch resistentem metallischen Material oder aus thermisch und chemisch resistenten Kunststoffmaterial gefertigt ist.

8. Elektrochemischer Sensor (1, 101) nach einem der Ansprüche 1 bis 7, **dadurch gekennzeichnet, dass** das Dichtungselement (9, 109) einen Ring aus elastischen Polymermaterial oder aus einem Elastomer aufweist.

9. Verfahren zur Herstellung eines elektrochemischen Sensors (1, 101) mit einer im Gebrauch einem Messmedium (5) zugewandten planen Messfläche (8, 108), welches die folgenden Schritte aufweist:
• Herstellen einer untrennbaren Verbindung eines Wafers aufweisend sensitives Material mit Isolatormaterial zu einem mindestens zweilagigen Wafer (20);
• Erzeugen einer vordefinierten Dicke durch Bearbeiten des sensitiven Materials und gegebenenfalls des damit verbundenen Isolatormaterials (30);
• Strukturieren des Isolatormaterials unter Freistellung oder Aussparung einer Messfläche (8, 108) im sensitiven Material zur Bildung eines Messelements (2, 102) (40), wobei das Messelement (2, 102) eine flache, ebene Scheibe aus elektrochemisch aktivem pH-Glas aufweist oder eine flache, ebene Schicht oder Schichtstruktur aufweist, welche elektrochemisch aktives pH-Glas umfasst;
• Schneiden des mindestens zweilagigen Wafers aus verbundenem sensitiven Material und strukturiertem Isolatormaterial in den Bereichen vorhandenen Isolatormaterials (50) zu mit Isolatorelementen (10, 110) versehenen Sensorelementen (15, 115) ;
• Einbau eines derart erzeugten Sensorelements (15, 115) in einen Sensorschaft (4, 104), wobei ein Dichtungselement (9, 109) zwischen dem Isolatorelement (10, 110) und einer Einfassung (11, 111) am im Gebrauch dem Messmedium (5) zugewandten Ende des Sensorschafts (4, 104) dichtend eingebracht wird (60).

10. Verfahren nach Anspruch 9, wobei das sensitive Material ein elektrochemisch aktives pH-Glas aufweist und wobei das Isolatormaterial ein thermisch und chemisch beständiges Isolatorglas mit einem zum sensitiven Material identischen, thermischen Ausdehnungskoeffizienten aufweist, welches Isolatormaterial vermittels "Direct Bonding" oder "Fusion Bonding" untrennbar zu einem mindestens zweilagigen Wafer mit dem sensitiven Material verbunden wird.

11. Verfahren nach Anspruch 9, wobei das Isolatormaterial eine Isolatorschicht, insbesondere aus Siliziumnitrid, umfasst, welche mittels physikalischer oder chemischer Abscheideverfahren auf das sensitive Material aufgebracht und mit diesem zu einem mindestens zweilagigen Wafer verbunden wird.

12. Verfahren nach Anspruch 11, wobei die mittels physikalischer oder chemischer Abscheideverfahren aufgebrachte Isolatorschicht vermittels einer Maske direkt während des Abscheidens in Form von Isolatorelementen strukturiert erzeugt wird.

13. Verfahren nach einem der Ansprüche 9 bis 11, wobei das Isolatormaterial auf dem sensitiven Material vermittels Ätztechnik, insbesondere nasschemisch mit Flusssäure oder vermittels Plasmaätzen, strukturiert wird.

## Claims

1. An electrochemical sensor (1, 101), having
a sensor element (15, 115) with a measuring surface (8, 108) facing a measuring medium (5) in use, which sensor element (15, 115) comprises a planar measuring element (2, 102);
a sensor shaft (4, 104) having an aperture (13, 113) with a bezel (11, 111) at its end facing the measuring medium (5) in use, and in which sensor shaft (4, 104) the sensor element (15, 115) is installed in the area of the aperture (13, 113);
an annular sealing element (9, 109) which is arranged between the sensor element (15, 115) and the bezel (11, 111);
wherein the measuring element (2, 102) has a flat, planar disk of electrochemically active pH glass or has a flat, planar layer or layer structure comprising electrochemically active pH glass;
wherein the sensor element (15, 115) has an insulator element (10, 110) which is firmly and inseparably connected with the measuring element (2, 102), exposing the measuring surface (8, 108); and
wherein the sealing element (9, 109) is arranged between the insulator element (10, 110) and the bezel (11, 111) in a sealing manner, protecting the electrochemical sensor against the ingress of measuring medium (5).

2. The electrochemical sensor (1, 101) according to claim 1, **characterized in that** the insulator element (10, 110) has a thermally and chemically resistant insulator glass whose coefficient of thermal expansion is substantially identical to the coefficient of thermal expansion of the measuring element (2, 102).

3. The electrochemical sensor (1, 101) according to claim 1, **characterized in that** the insulator element (10, 110) has an insulator layer, in particular of silicon nitride, applied by means of physical or chemical deposition methods.

4. The electrochemical sensor (1, 101) according to any one of claims 1 to 3, **characterized in that** the sensor shaft (4, 104) is cylindrical and **in that** the aperture (13, 113) is arranged on the end face of the sensor shaft (4, 104).

5. The electrochemical sensor (1, 101) according to any one of claims 1 to 4, **characterized in that** the sensor shaft (4, 104) is cylindrical and **in that** the aperture (13, 113) is arranged in a flattened area (112) of the lateral surface of the cylinder of the sensor shaft (4, 104).

6. The electrochemical sensor (1, 101) according to claim 5, **characterized in that** the measuring surface (8, 108) of the measuring element (2, 102) is of circular or elliptical or rectangular shape.

7. The electrochemical sensor (1, 101) according to any one of claims 1 to 6, **characterized in that** the sensor shaft (4, 104) is made from thermally and chemically resistant metallic material or from thermally and chemically resistant plastic material.

8. The electrochemical sensor (1, 101) according to any one of claims 1 to 7, **characterized in that** the sealing element (9, 109) has a ring made of elastic polymer material or of an elastomer.

9. A method for fabrication of an electrochemical sensor (1, 101) with a planar measuring surface (8, 108) facing a measuring medium (5) in use, having the steps of:
• fabricating an inseparable bond between a wafer having sensitive material and insulator material to form an at least two-layer wafer (20);
• producing a predefined thickness by machining the sensitive material and, if applicable, the bonded insulator material (30);
• structuring the insulator material by exposing or leaving blank a measuring surface (8, 108) in the sensitive material to form a measuring element (2, 102) (40), wherein the measuring element (2, 102) has a flat, planar disk made of electrochemically active pH glass or a flat, planar layer or layer structure, which comprises electrochemically active pH glass;
• cutting the at least two-layer wafer of bonded sensitive material and structured insulator material in the areas of existing insulator material (50) to form sensor elements (15, 115) provided with insulator elements (10, 110);
• installing a sensor element (15, 115) produced in this way in a sensor shaft (4, 104), wherein a sealing element (9, 109) is introduced (60) in a sealing manner between the insulator element (10, 110) and a bezel (11, 111) at the end of the sensor shaft (4, 104) facing the measuring medium (5) in use.

10. The method according to claim 9, wherein the sensitive material has an electrochemically active pH glass and wherein the insulator material has a thermally and chemically resistant insulator glass with a coefficient of thermal expansion identical to the sensitive material, which insulator material is inseparably bonded to the sensitive material by means of direct bonding or fusion bonding to form an at least two-layer wafer.

11. The method according to claim 9, wherein the insulator material comprises an insulator layer, in particular of silicon nitride, which is applied to the sensitive material by means of physical or chemical deposition methods and is bonded thereto to form an at least two-layer wafer.

12. The method according to claim 11, wherein the insulator layer applied by means of physical or chemical deposition methods is produced directly during deposition by a mask and in a structured manner in the form of insulator elements.

13. The method according to any one of claims 9 to 11, wherein the insulator material on the sensitive material is structured by means of etching technique, in particular wet-chemically with hydrofluoric acid or by means of plasma etching.

## Revendications

1. Capteur électrochimique (1, 101) comportant
un élément de détection (15, 115) ayant une surface de mesure (8, 108) tournée vers un milieu de mesure (5) pendant l'utilisation, lequel élément de détection (15, 115) comprend un élément de mesure plan (2, 102) ;
une tige de capteur (4, 104) qui comporte à son extrémité tournée vers le milieu de mesure (5) pendant l'utilisation une fenêtre (13, 113) avec une bordure (11, 111) et dans laquelle tige de capteur (4, 104) l'élément de détection (15, 115) est monté dans la zone de la fenêtre (13, 113) ;
un élément d'étanchéité annulaire (9, 109) disposé entre l'élément de détection (15, 115) et la bordure (11, 111) ;
dans lequel l'élément de mesure (2, 102) comporte un disque plan et plat, en verre à pH électrochimiquement actif, ou une couche ou une structure stratifiée plane et plate comprenant du verre à pH électrochimiquement actif ;
dans lequel l'élément de détection (15, 115) comporte un élément isolant (10, 110) qui est relié de manière fixe et indissociable à l'élément de mesure (2, 102) avec dégagement de la surface de mesure (8, 108) ; et
dans lequel l'élément d'étanchéité (9, 109), qui protège le capteur électrochimique contre la pénétration du milieu de mesure (5), est disposé de manière étanche entre l'élément isolant (10, 110) et la bordure (11, 111).

2. Capteur électrochimique (1, 101) selon la revendication 1, **caractérisé en ce que** l'élément isolant (10, 110) comporte un verre isolant, thermiquement et chimiquement résistant, dont le coefficient de dilatation thermique est sensiblement identique au coefficient de dilatation thermique de l'élément de mesure (2, 102).

3. Capteur électrochimique (1, 101) selon la revendication 1, **caractérisé en ce que** l'élément isolant (10, 110) comporte une couche isolante, en particulier en nitrure de silicium, appliquée au moyen de procédés de dépôt physiques ou chimiques.

4. Capteur électrochimique (1, 101) selon l'une des revendications 1 à 3, **caractérisé en ce que** la tige de capteur (4, 104) est cylindrique et **en ce que** la fenêtre (13, 113) est disposée sur la face frontale de la tige de capteur (4, 104).

5. Capteur électrochimique (1, 101) selon l'une des revendications 1 à 4, **caractérisé en ce que** la tige de capteur (4, 104) est cylindrique et **en ce que** la fenêtre (13, 113) est disposée dans une zone aplatie (112) de l'enveloppe cylindrique de la tige de capteur (4, 104).

6. Capteur électrochimique (1, 101) selon la revendication 5, **caractérisé en ce que** la surface de mesure (8, 108) de l'élément de mesure (2, 102) est de forme circulaire ou elliptique ou rectangulaire.

7. Capteur électrochimique (1, 101) selon l'une des revendications 1 à 6, **caractérisé en ce que** la tige de capteur (4, 104) est fabriquée en un matériau métallique, thermiquement et chimiquement résistant, ou en un matériau plastique, thermiquement et chimiquement résistant.

8. Capteur électrochimique (1, 101) selon l'une des revendications 1 à 7, **caractérisé en ce que** l'élément d'étanchéité (9, 109) comporte un anneau en matériau polymère élastique ou en élastomère.

9. Procédé de fabrication d'un capteur électrochimique (1, 101) ayant une surface de mesure plane (8, 108) tournée vers un milieu de mesure (5) pendant l'utilisation, comportant les étapes suivantes :
• réalisation d'une liaison indissociable entre une plaquette comportant un matériau sensible et un matériau isolant et une plaquette (20) à au moins deux couches ;
• obtention d'une épaisseur prédéfinie en usinant le matériau sensible et, le cas échéant, le matériau isolant (30) qui lui est associé ;
• structuration du matériau isolant en dégageant ou en évidant une surface de mesure (8, 108) dans le matériau sensible pour former un élément de mesure (2, 102) (40), dans lequel l'élément de mesure (2, 102) comporte un disque plan et plat en verre à pH électrochimiquement actif ou comporte une couche ou une structure stratifiée plane et plate comprenant du verre à pH électrochimiquement actif ;
• découpage de la plaquette à au moins deux couches composée d'un matériau sensible relié et d'un matériau isolant structuré dans les zones du matériau isolant (50) présent pour former des éléments de détection (15, 115) pourvus d'éléments isolants (10, 110) ;
• montage d'un élément de détection (15, 115) ainsi obtenu dans une tige de capteur (4, 104), dans lequel un élément d'étanchéité (9, 109) est introduit de manière étanche (60) entre l'élément isolant (10, 110) et une bordure (11, 111) à l'extrémité de la tige de capteur (4, 104) tournée vers le milieu de mesure (5) pendant l'utilisation.

10. Procédé selon la revendication 9, dans lequel le matériau sensible comporte un verre à pH électrochimiquement actif et dans lequel le matériau isolant comporte un verre isolant, thermiquement et chimiquement résistant, ayant un coefficient de dilatation thermique identique au matériau sensible, lequel matériau isolant est lié de manière indissociable au matériau sensible au moyen d'une liaison directe ou d'une liaison par fusion pour former une plaquette à au moins deux couches.

11. Procédé selon la revendication 9, dans lequel le matériau isolant comprend une couche isolante, en particulier en nitrure de silicium, qui est appliquée sur le matériau sensible au moyen de procédés de dépôt physiques ou chimiques et qui est liée audit matériau pour former une plaquette à au moins deux couches.

12. Procédé selon la revendication 11, dans lequel la couche isolante appliquée par des procédé de dépôt physiques ou chimiques est réalisée de manière structurée par un masque directement sous la forme d'éléments isolants pendant le dépôt.

13. Procédé selon l'une des revendications 9 à 11, dans lequel le matériau isolant est structuré sur le matériau sensible par une technique de gravure, en particulier par voie chimique humide avec de l'acide fluorhydrique ou par gravure au plasma.
